# EUROPÄISCHE PATENTANMELDUNG

(11) **EP 4 332 945 A1**
(43) Veröffentlichungstag der Anmeldung: **06.03.2024**
(21) Anmeldenummer: 23194798.7
(22) Anmeldetag: 01.09.2023
(51) Int. Cl.: G09B 9/00, F41A 33/00, F41A 33/02, F41A 33/04

(54) **SIMULATIONSVORRICHTUNG ZUR SIMULATION VON GEFECHTSFELDEREIGNISSEN**

(30) Priorität: 01.09.2022 DE 102022122202
(71) Anmelder: ARX Landsysteme GmbH, 85577 Neubiberg (DE)
(72) Erfinder: Wietfeld, Marc Abdelmounaim, 80997 München (DE)
(74) Vertreter: Kilian Kilian & Partner mbB

(57) **Zusammenfassung**

Simulationsvorrichtung (1) zur Simulation von Gefechtsfeldereignissen mit einer Schallwiedergabeeinheit (2), die dafür eingerichtet ist,
- eine Audiodatei wiederzugeben, die Steuersignale mit Signalspitzen aufweist, die ein Simulationsereignis auslöst, das für ein akustisch wirkendes Gefechtsfeldereignis repräsentativ ist, und/oder
- unterschiedliche Audiodateien wiederzugeben, die für unterschiedliche akustisch wirkende Gefechtsfeldereignisse repräsentativ sind,
und mit einer Steuereinheit zum Steuern und/oder Auswählen der jeweils wiederzugebenden Audiodatei.

## Beschreibung

Die Erfindung betrifft eine Simulationsvorrichtung zur Simulation von Gefechtsfeldereignissen.

Aus der DE 10 2017 114 974 A1 ist eine Vorrichtung zur Erzeugung von Blitz- und/oder Knalleffekten bekannt geworden, wie sie bei Militär- oder Sicherheitskräften eingesetzt wird. Solche Vorrichtungen können für defensive Abwehr oder zu Simulations- und Trainingszwecken verwendet werden. Die Vorrichtung enthält einen pyrotechnischen Satz, der bei Zündung die gewünschten Blitz- und/oder Knalleffekte hervorrufen kann. Die Verwendung eines pyrotechnischen Satzes zur Simulation von Gefechtsfeldereignissen ist jedoch aus Kostengründen, unter Umweltgesichtspunkten und aufgrund eines möglichen Verletzungsrisikos bei Fehlauslösung nachteilig.

Aufgabe der Erfindung ist es, eine eingangs genannte Simulationsvorrichtung zu schaffen, die im Hinblick auf die genannten Nachteile verbessert ist.

Diese Aufgabe wird erfindungsgemäß gelöst durch eine Simulationsvorrichtung zur Simulation von Gefechtsfeldereignissen mit einer Schallwiedergabeeinheit, die dafür eingerichtet ist, eine Audiodatei wiederzugeben, die Steuersignale mit Signalspitzen aufweist, die ein Simulationsereignis auslöst, das für ein akustisch wirkendes Gefechtsfeldereignis repräsentativ ist, und/oder unterschiedliche Audiodateien wiederzugeben, die für unterschiedliche akustisch wirkende Gefechtsfeldereignisse repräsentativ sind, zum Steuern und/oder Auswählen der jeweils wiederzugebenden Audiodatei.

Die Aufgabe wird auch gelöst durch eine Audiodatei zur Schallwiedergabe von simulierten Gefechtsfeldereignissen mittels einer Schallwiedergabeeinheit, insbesondere zur Schallwiedergabe mittels einer Schallwiedergabeeinheit einer Simulationsvorrichtung, wobei die Audiodatei eingearbeitete Steuersignale enthält, die über eine Auslöseschwelle reichende Signalspitzen enthalten und die zumindest ein ein Gefechtsfeldereignis simulierendes Simulationsereignis auslösen.

Vorteilhafte Ausgestaltungen der Erfindung sind in den abhängigen Ansprüchen angegeben.

Eine erfindungsgemäße Simulationsvorrichtung kann beispielsweise Schussereignisse von Gewehren, Maschinengewehren oder Geschützen oder auch Detonationen beispielsweise von Granaten simulieren. Dabei kann neben der akustischen Simulation auch eine optische Simulation erfolgen, z. B. eine Darstellung von Mündungsfeuer oder von Detonationsblitzen.

Bei einer erfindungsgemäßen Simulationsvorrichtung ist somit gemäß einer ersten Lösung die Simulationsvorrichtung oder die Schallwiedergabeeinheit dafür eingerichtet, eine solche Audiodatei wiederzugeben, die Steuersignale mit Signalspitzen enthält, die zumindest ein Simulationsereignis auslösen. Die Steuersignale mit den Signalspitzen sind vorzugsweise in die zunächst in einer Ausgangsform vorliegende Audiodatei eingearbeiteten worden und ändern diese ab oder ergänzen diese, so dass eine definierte Auslösung von Simulationsereignissen erfolgen kann. Zweckmäßigerweise überschreiten die Steuersignale mit ihren Signalspitzen eine definierte Auslöseschwelle.

Bei einer erfindungsgemäßen Simulationsvorrichtung ist somit gemäß einer zweiten Lösung die Simulationsvorrichtung oder die Schallwiedergabeeinheit dafür eingerichtet, unterschiedliche Audiodateien wiederzugeben, die für unterschiedliche akustisch wirkende Gefechtsfeldereignisse repräsentativ sind.

Durch das Abspielen einer Vielzahl von unterschiedlichen gespeicherten Audiodateien steht eine mittels der Steuereinheit vorzunehmende Auswahl unter vielen unterschiedlichen Simulationsereignissen zur Verfügung.

Ein solches auszulösendes Simulationsereignis ist z. B. eine Blitzerzeugung mittels einer LED-Blitzlichteinheit der Simulationsvorrichtung. Blitze einer solchen Blitzerzeugung können beispielsweise das Mündungsfeuer eines Maschinengewehrs oder dergleichen simulieren. Die in ihrer Ausgangsform vorliegende Audiodatei ist z. B. die Aufnahme des Geräuschs beim mehrfachen wiederholten Feuern eines Maschinengewehrs.

Eine erfindungsgemäße Simulationsvorrichtung gemäß einer dritten Lösung enthält eine Kombination der ersten Lösung mit der zweiten Lösung. Dabei ist zumindest eine der unterschiedlichen gespeicherten Audiodateien eine solche bearbeitete Audiodatei mit Signalspitzen gemäß der ersten Lösung.

Gefechtsfeldereignisse sind nicht auf ein militärisches Umfeld beschränkt, sondern stellen auch Ereignisse bei Polizeieinsätzen und Polizeiausbildung wie auch bei Sicherheitsdiensten oder ähnlichen Einsätzen dar. Die Simulationsvorrichtung ist grundsätzlich zur Verwendung bei der Schieß- und Gefechtsausbildung, auf Truppenübungsplätzen und Standortschießanlagen oder in Kasernen wie auch bei realen Einsätzen sowohl im militärischen Umfeld wie auch bei der Polizei, bei Sicherheitsdiensten und allgemein in einem Umfeld, in dem Waffen eingesetzt werden, vorgesehen. Somit ist die Simulationsvorrichtung grundsätzlich zum Simulieren und Täuschen im Gefecht, in der Gefechtsausbildung und in der Schießausbildung vorgesehen. Die Erfindung betrifft somit auch eine Verwendung der Simulationsvorrichtung zur Simulation von Gefechtsfeldereignissen nach einem der Ansprüche 1 bis 12 im militärische wie auch im zivilen Umfeld und für die Ausbildung wie auch für einen realen Einsatz.

Gemäß einer bevorzugten Ausführungsform ist vorgesehen, dass ein Lautsprecher oder Basslautsprecher der Schallwiedergabeeinheit eine Lautsprechermembran oder eine Bassmembran aufweist. Die Schallwiedergabeeinheit weist zumindest einen solchen Lautsprecher oder Basslautsprecher auf. Der Lautsprecher oder Basslautsprecher ist vorzugsweise in einem Gehäuse der Simulationsvorrichtung untergebracht, das zweckmäßigerweise zumindest eine Öffnung für den Schallaustritt aufweist. Unterschiedliche Gehäuseformen können zur Aufnahme von Lautsprechern verwendet werden. Grundsätzlich kann jedoch auch eine offene Anbringung des Lautsprechers an einer Basiseinheit oder an einer Halterung oder dergleichen vorgesehen sein.

Insbesondere ist vorgesehen, dass die Steuersignale der Audiodatei die Lautsprechermembran oder die Bassmembran mit solchen Membranauslenkungen schwingen lässt, die eine Blitzerzeugung der LED-Blitzlichteinheit auslösen. Die Größe der Auslenkungen der Membran bestimmt somit die Auslösung. Eine geringe Membranauslenkung aufgrund eines z. B. durchschnittlichen aufgenommenen Gefechtsfeldgeräuschs erzeugt keine Auslösung. Bevorzugt wird mit dem Steuersignal ein Basslautsprecher angesteuert. Grundsätzlich kann jedoch jeder Lautsprecher verwendet werden, der aufgrund des Steuersignals zu einer ausreichend großen Membranauslenkung angeregt werden kann.

Zweckmäßigerweise ist vorgesehen, dass ein Übertragungsmittel die Membranauslenkung der Lautsprechermembran oder Bassmembran auf eine Auslöseeinheit der LED-Blitzlichteinheit überträgt. Ein solches Übertragungsmittel enthält z. B. zumindest ein mechanisches Bauteil oder wird von einem mechatronischen System gebildet. Das Übertragungsmittel kann auch überwiegend elektronische Bauelemente aufweisen.

Gemäß einer bevorzugten Ausführungsform ist vorgesehen, dass das Übertragungsmittel zumindest ein mechanisches Bauteil aufweist und insbesondere ein Kolben oder ein Stift ist oder einen Kolben oder einen Stift enthält. Das Übertragungsmittel ist mit der Lautsprechermembran oder der Bassmembran verbunden und wird von der Membranauslenkung bewegt. Die Auslöseeinheit weist eine mit der LED-Blitzlichteinheit gekoppelte Lichtschranke auf, die von dem Übertragungsmittel aufgrund seiner Steuerauslenkung zum Auslösen der Blitzerzeugung der LED-Blitzlichteinheit betätigt wird. Das Übertragungsmittel ist verschiebbar gelagert und in Richtung der Membranauslenkung oder einer zentralen Achse des Lautsprechers axial bewegbar. Die LED-Blitzlichteinheit ist vorzugsweise in oder an einem rohrförmigen Bauteil angeordnet. Das rohrförmige Bauteil simuliert einen Lauf einer Schusswaffe und die Blitze der LED-Blitzlichteinheit simulieren Mündungsfeuer der Schusswaffe. Das rohrförmige Bauteil ist zweckmäßigerweise derart vor der Lautsprechermembran angeordnet, dass das Übertragungsmittel oder der Kolben bis in einen Hinterabschnitt des rohrförmigen Bauteils eingreift, in dem es auch verschiebbar gelagert sein kann. Die Lichtschranke ist zweckmäßigerweise in dem rohrförmigen Bauteil angeordnet und von einer vorderen Spitze des Übertragungsmittels oder des Kolbens betätigbar.

Die vorzugsweise modular aufgebaute Simulationsvorrichtung weist in einer zweckmäßigen Ausgestaltung zumindest eine Nebelerzeugungseinheit auf. Die Nebelerzeugungseinheit versprüht insbesondere mittels zumindest einer Zerstäuberdüse eine Flüssigkeit wie z. B. Wasser oder Parafin und erzeugt hierbei Nebel. Der Nebel kann auch Abschussdunst wie auch Rauch im Gefechtsfeld simulieren und er kann auch in unterschiedlichen Farben erzeugt werden. Die Erzeugung von Nebel und die zugeordnete Simulation kann begleitend zur akustischen und optischen Simulation durch die Schallwiedergabeeinheit bzw. durch die LED-Blitzlichteinheit erfolgen oder sie kann auch zur alleinigen Simulation unabhängig von einer Schusssimulation eingesetzt werden.

Vorzugsweise ist zumindest eine der Zerstäuberdüsen der Nebelerzeugungseinheit heizbar oder temperierbar, vorzugsweise auf eine Temperatur im Bereich von etwa 50°C bis 300°C und insbesondere im Bereich von etwa 250°C bis 300°C. Mittels der temperierten Zerstäuberdüse kann ein Schussereignis thermodynamisch simuliert werden. Bei einer solchen thermodynamischen Simulation kann die beheizte Zerstäuberdüse mittels eines Wärmebildgeräts oder dergleichen erfasst werden.

Gemäß einer bevorzugten Ausführungsform weist die Simulationsvorrichtung eine Umfelderkennungseinrichtung auf, die Umfeldsignale detektiert und unterschiedlichen Auslösesteuerungssignalen zuordnet. Die Auslösesteuerungssignale lösen nach Detektion und Klassifizierung über die Steuereinheit jeweils zugeordnete oder angepasste Simulationsereignisse aus. Zweckmäßigerweise umfasst die Umfelderkennungseinrichtung Sensoren und/oder zumindest eine Kamera und/oder einen Lasereffektor zum Detektieren und Klassifizieren von Gegenständen oder Personen.

Ein solcher Lasereffektor ist zweckmäßigerweise als weiteres Modul an der Simulationsvorrichtung angeordnet. Der Lasereffektor ist zum Emittieren von breitflächig richtungsgerichteten und abstreuenden Laserstrahlen vorgesehen. Mittels dieser Laserstrahlen werden Beschuss- und Zielerfassungssensoren wie z. B. von Laserwarnern und/oder aktive und passive Abwehrsysteme von gepanzerten Fahrzeugen und dergleichen ausgelöst, gestört und/oder geblendet.

Eine solche Kamera kann zweckmäßigerweise mittels des Einsatzes einer Kl-Software Personen und Fahrzeuge und deren Bewegungen detektieren und klassifizieren.

Eine solche Simulationsvorrichtung ist zweckmäßigerweise als mobile bewegbare Einheit oder als Mobilroboter gebildet oder auf einem solchen Mobilroboter angeordnet. Der Mobilroboter weist insbesondere ein motorisiertes Fahrwerk zur Bewegung an unterschiedliche Einsatzorte auf. Der Betrieb des Mobilroboters wie der gesamte Simulationsvorrichtung erfolgt mittels Stromversorgung von mitgeführten Akkus. Die Mobilität kann durch ein Fahrwerk mit Rädern oder mit Ketten und/oder durch eine schwimmfähige bewegbare mobile Einheit realisiert sein.

Andererseits ist eine solche Simulationsvorrichtung auch als stationäre Einheit zu betreiben. Insbesondere können mehrere solcher Simulationsvorrichtungen über ein Simulationsgebiet verteilt stationär angeordnet sein.

Gemäß einer bevorzugten Ausführungsform enthält die Steuereinheit ein Programm, das vorprogrammierte GPS-Wegpunkte eines Bewegungsweges zu unterschiedlichen Einsatzorten aufweist und das die mobile Einheit bzw. den Mobilroboter auf diesem Bewegungsweg steuert. Andererseits oder zusätzlich kann die Steuereinheit auch zum Ausführen frei wählbarer Simulationsereignisse fernsteuerbar sein. Damit kann flexibel z. B. auf auftretende Gefechtsfeldereignisse reagiert werden. Die Simulationsereignisse oder die Simulation beispielsweise von LED-Blitzen, von Nebel, Schüssen oder Explosionen können somit von einer Bedienperson über eine Fernsteuerung vorgenommen werden. Weiterhin kann die Steuereinheit auch dazu vorgesehen sein, dass aufgrund der von Sensoren der Umfelderkennungseinrichtung erkannten Umfeldereignissen, Geräuschen, Personen, Gegenständen oder Fahrzeugen eine Reaktion zur Auslösung von Simulationsereignissen und/oder eine Bewegung der mobilen Einheit bzw. des Mobilroboters zur Veränderung der Position der Simulationsvorrichtung auf einem Bewegungsweg erfolgt, die einen Eingriff der Bedienperson nicht erfordert oder die durch den Eingriff einer Bedienperson abgeändert werden kann.

Vorzugsweise erfolgt eine Kommunikation zwischen einer Steuerzentrale und der Simulationsvorrichtung mittels Kabel-, Funk-, Bluetooth-, Wifi- oder 4G/5G-Verbindung. Um eine Multikonnektivität und Redundanz bereitzustellen, weist die Simulationsvorrichtung für zumindest zwei der genannten Verbindungen die nötigen Einrichtungen und Anschlüsse auf. Bei Ausfall oder Störung einer solchen Einrichtung oder Kommunikationsverbindung kann die Kommunikation sofort über die zumindest eine weitere Kommunikationsverbindung erfolgen.

Mit einer erfindungsgemäßen Audiodatei zur Schallwiedergabe von simulierten Gefechtsfeldereignissen mittels einer Schallwiedergabeeinheit können somit zumindest die voranstehend beschriebenen Simulationsereignisse sicher ausgelöst werden. Die Audiodatei, die z. B. durch Aufzeichnen des Geräuschs eines feuernden Maschinengewehrs oder auch von Gefechtslärm oder Motorengeräuschen erzeugt worden ist, enthält eingearbeitete Steuersignale, die über eine Auslöseschwelle reichende Signalspitzen enthalten und die zumindest ein ein Gefechtsfeldereignis simulierendes Simulationsereignis auslösen. Die Audiodatei kann für das Auslösen oder Brechen eines einzelnen Schusses mit zugehörigem Mündungsfeuerblitz bearbeitet sein, wobei einzelne Schüsse in zeitlicher Aufeinanderfolge und voneinander beabstandet simuliert werden können. Die Audiodatei kann insbesondere auch für das Auslösen oder Brechen einer hohen Schusskadenz eines Maschinengewehrs, beispielsweise 1000 Schüsse pro Minute, bearbeitet sein.

Eine solche Audiodatei ist insbesondere zur Schallwiedergabe mittels einer Schallwiedergabeeinheit einer Simulationsvorrichtung nach einem der Ansprüche 1 bis 12 bzw. einer voranstehend beschriebenen Simulationsvorrichtung vorgesehen.

Es ist besonders bevorzugt, dass die Steuersignale zur definierten Auslösung einer Bassmembran eines Lautsprechers der Schallwiedergabeeinheit eingearbeitet werden. Dabei wird eine der Bassmembran entsprechende Signalhöhe, insbesondere auch Signaldauer, eingearbeitet.

Vorzugsweise lösen die Steuersignale als Simulationsereignis eine Schusskadenz einer Schusswaffe, insbesondere eines Maschinengewehrs, aus. Jedoch können auch andere Simulationsereignisse wie Detonationen oder optische Simulationsereignisse wie Lichtblitze oder eine Nebelerzeugung ausgelöst werden.

Nachfolgend wird ein Ausführungsbeispiel einer erfindungsgemäßen Simulationsvorrichtung unter Bezugnahme auf die Zeichnung näher erläutert. Es zeigt:

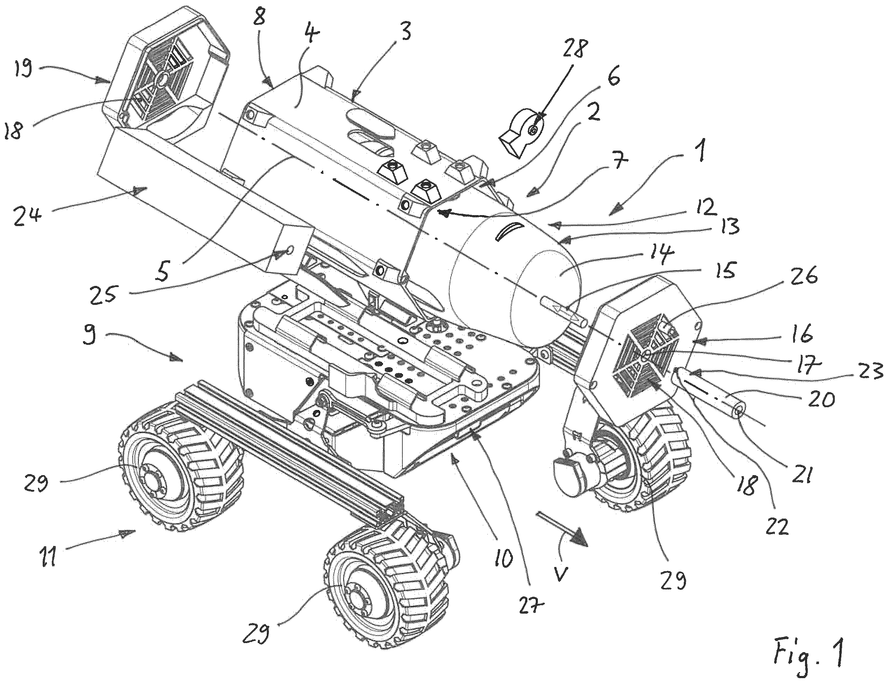

- Fig. 1: in einer isometrischen Ansicht in Explosionsdarstellung eine Simulationsvorrichtung auf einem Mobilroboter; und
- Fig. 2: eine Darstellung einer Audiodatei zur Simulation eines Gefechtsfeldereignisses.

Eine Simulationsvorrichtung 1, die zur Verwendung als Täusch- und Simulationskörper bei der Simulation von Gefechtsfeldereignissen vorgesehen ist, ist modular aufgebaut und weist als ein erstes Modul eine Schallwiedergabeeinheit 2 auf, die in einem Gehäuse 3 der Simulationsvorrichtung 1 aufgenommen ist. Das Gehäuse 3 enthält eine Gehäusewandung 4, die im Querschnitt in Form eines bezüglich einer zentralen Längsachse 5 des Gehäuses 3 beispielsweise regelmäßigen Sechsecks gebildet ist und einen Gehäuseinnenraum 6 umgibt, sowie zwei sich gegenüberliegende Gehäuseöffnungen 7 und 8. Die Simulationsvorrichtung 1 enthält weiterhin einen Mobilroboter 9, der eine zentrale Roboterplattform 10 mit einem Fahrwerk 11 aufweist. Das Gehäuse 3 ist auf der Roboterplattform 10 derart in Längsausrichtung angebracht, dass seine zentrale Längsachse 5 in einer nach vorne gerichteten Hauptfahrrichtung V des Mobilroboters 9 ausgerichtet ist und die zwei Gehäuseöffnungen als vordere Gehäuseöffnung 7 und als hintere Gehäuseöffnung 8 bezeichnet werden.

Die Schallwiedergabeeinheit 2 enthält eine Lautsprecheranordnung 12 mit zumindest einem Basslautsprecher 13, der im Gehäuseinnenraum 6 derart angeordnet ist, dass seine Bassmembran 14 in Zuordnung zu der vorderen Gehäuseöffnung 7 angeordnet ist und in Richtung der zentralen Längsachse 5 des Gehäuses 3 schwingen kann. Ein längliches Betätigungselement wie z. B. ein zylindrischer Stift oder Kolben 15 ist in einer zur zentralen Längsachse 5 des Gehäuses 3 koaxialen Ausrichtung mit der Bassmembran14 verbunden, so dass er von der schwingenden Bassmembran 14 ausgelenkt wird und sich mit der Frequenz der Bassmembran 14 axial schwingend bewegt.

Eine vordere Abdeckkappe 16 deckt die vordere Gehäuseöffnung 7 ab und ist am Gehäuse 3 z. B. durch eine Verschraubung befestigt. Die vordere Abdeckkappe 16 weist eine zentrale Öffnung 17 auf, durch die sich der Kolben 15 erstreckt. Weiterhin weist die vordere Abdeckkappe 16 z. B. schlitzförmige Öffnungen 18 auf, durch die von den Lautsprechern der Lautsprecheranordnung 12 erzeugte Schallwellen austreten können. Eine der vorderen Abdeckkappe 16 gleichende hintere Abdeckkappe 19 deckt die hintere Gehäuseöffnung 8 ab und ist am Gehäuse 3 z. B. durch eine Verschraubung befestigt.

Ein Rohr 20 erstreckt sich von der vorderen Abdeckkappe 16 ausgehend in koaxialer Anordnung zur zentralen Längsachse 5 und zur Öffnung 17 der vorderen Abdeckkappe 16 nach vorne. Das Rohr 20 ist beispielsweise mit einer Halterung (nicht dargestellt) an der vorderen Abdeckkappe 16 befestigt. Das Rohr 20 weist eine LED-Blitzlichteinheit mit mehrere LEDs auf, die bei entsprechender Ansteuerung Blitzlicht erzeugen, das Mündungsfeuer einer Schusswaffe simulieren kann. Die LEDs sind vorzugsweise im Inneren des Rohres 20 angeordnet, so dass das simulierte Mündungsfeuer durch eine vordere Rohröffnung 21 sichtbar ist. Der Kolben 15 erstreckt sich durch eine hintere Rohröffnung 22 in einen Hinterabschnitt 23 des Rohres 20 hinein. Eine Lichtschranke ist an dem Hinterabschnitt 23 des Rohres 20 derart in Relation zu dem Kolben 15 angeordnet, dass der Kolben 15, wenn er sich mit der schwingenden Bassmembran 14 über eine größere Wegstrecke in das Rohr 20 hinein bewegt, die Lichtschranke auslöst.

Die Simulationsvorrichtung 1 weist eine Steuereinheit auf, die einen Speicher für mehrere Audiodateien enthält, die über die Schallwiedergabeeinheit 2 ausgegeben werden können. Die Audiodateien enthalten jeweils Audioaufnahmen von Gefechtsfeldereignissen wie z. B. von Schussereignissen oder Detonationen. Hierbei können die Geräusche jeglicher Waffenarten und Munitionsarten und Detonationen als Audioaufnahmen aufgenommen werden. Zumindest einige der Audiodateien, die insbesondere Schussereignisse enthalten, sind derart bearbeitet worden, dass in die Audioaufnahmen Steuersignale eingearbeitet sind, die eine Auslenkung der Bassmembran 14 mit einem vergrößerten Membranhub bewirken. Ein solcher vergrößerter Membranhub bewirkt, dass sich der Kolben 15 über die durch den Membranhub veranlasste größere Wegstrecke soweit zum Rohr 20 hin bewegt, dass er dabei die Lichtschranke auslöst. Somit erfolgt die Audiowiedergabe eines Schussereignisses mit verstärkter Basslautstärke und damit gekoppelter LED-Blitzerzeugung als simuliertes Mündungsfeuer einer Schusswaffe.

Die Audiodatei kann für das Auslösen oder Brechen eines einzelnen Schusses mit zugehörigem Mündungsfeuerblitz bearbeitet sein, wobei einzelne Schüsse in zeitlicher Aufeinanderfolge und voneinander beabstandet simuliert werden können. Die Audiodatei kann insbesondere auch für das Auslösen oder Brechen einer hohen Schusskadenz eines Maschinengewehrs, beispielsweise 1000 Schüsse pro Minute, bearbeitet sein. So kann eine Audiodatei von z. B. 15 sec Länge mehrere einzelne und zeitlich voneinander beabstandete Feuerstöße mit jeweils hoher Schusskadenz mit synchroner Basswiedergabe und mit Mündungsfeuerblitzen simulieren. Hierdurch lassen sich Schussereignisse in besonders realitätsnaher Weise simulieren.

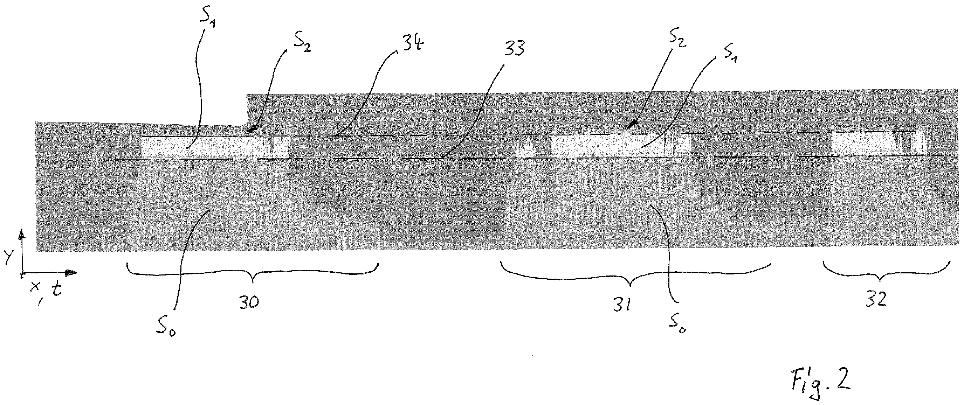

Fig. 2 zeigt eine solche bearbeitete Audiodatei. Ein Audiosignal ist in seinem zeitlichen Verlauf über die horizontale Zeitachse (x-Achse) aufgetragen. Das Audiosignal stellt eine Aufnahme des Geräuschs eines Maschinengewehrs mit drei zeitlich voneinander beabstandeten Feuerstößen, die als Signalzeitbereiche 30, 31 und 32 gekennzeichnet sind, mit jeweils hoher Schusskadenz und mit Nebengeräuschen dar. In jedem Signalzeitbereich 30, 31 und 32 ist die Signalhöhe des Audiosignals (in y-Richtung) in einem Signalbereich So unterhalb einer Basisschwelle 33 nicht ausreichend, um eine Basswiedergabe mittels der Bassmembran 14 zu bewirken. Ein Signalbereich S₁ mit größerer Signalhöhe ist unterhalb von der Basisschwelle 33 und oberhalb von einer Auslöseschwelle 34 begrenzt. In diesem Signalbereich S₁ kann das Audiosignal die Bassmembran 14 nicht zuverlässig zum Schwingen mit einer für ein gewünschtes Simulationsereignis ausreichenden Membranamplitude anregen, sondern beispielsweis nur ein tiefes Brummen erzeugen.

In einem Signalbereich S₂ oberhalb der Auslöseschwelle 34 weist das Audiosignal eine solche große Signalhöhe auf, dass die Bassmembran 14 zuverlässig zum Schwingen mit einer für ein gewünschtes Simulationsereignis ausreichenden Membranamplitude angeregt wird. Diese über die Auslöseschwelle 34 hinausragenden Signalspitzen sind von Steuersignalen gebildet, die zur definierten Auslösung der Bassmembran 14 oder weiterer Simulationsereignisse eingearbeitet sind, z. B. durch Überlagern oder Abändern des vorhandenen Audiosignals. In jedem Fall bewirkt die Bearbeitung des ursprünglich aufgenommenen Audiosignals die Erzeugung von Steuersignalen mit Signalspitzen oberhalb der Auslöseschwelle 34.

Mittels der Steuereinheit wird somit aus den gespeicherten Audiodateien die für die Simulation jeweils gewünschte Audiodatei ausgewählt. Diese Audiodatei wird mittels eines üblichen Audiowiedergabeprogramms über die Lautsprecher der Schallwiedergabeeinheit 2 akustisch wiedergegeben, wobei Schussgeräusche, Abschussgeräusche oder Detonationsgeräusche akustisch simuliert werden. Eine optische Simulation des jeweiligen Gefechtsfeldereignisses kann über die LED-Blitzlichteinheit erfolgen.

Das Auswählen und Abspielen der Audiodateien kann über die Steuereinheit wahlweise oder nach einem gespeicherten Programmablauf erfolgen. Die Simulationsvorrichtung 1 weist für ihren Betrieb eine Stromversorgung mittels Akkus oder Batterien auf. Bei einem stationären Betrieb kann die Simulationsvorrichtung 1 auch über einen Stromnetzanschluss versorgt werden.

Eine Kommunikation zwischen einer Steuerzentrale und der Simulationsvorrichtung 1 kann mittels Kabel-, Funk-, Bluetooth-, Wifi- oder 4G/5G-Verbindung erfolgen. Die Simulationsvorrichtung 1 ist zweckmäßigerweise für eine Multikonnektivität mit zumindest zwei der genannten Verbindungseinrichtungen ausgerüstet.

Die modular aufgebaute Simulationsvorrichtung 1 enthält gemäß einer bevorzugten Ausführungsform eine Nebelerzeugungseinheit 24. Die Nebelerzeugungseinheit 24 versprüht mittels einer Zerstäuberdüse 25 eine Flüssigkeit wie z. B. Wasser zur Erzeugung von Nebel. Der Nebel kann auch Abschussdunst wie auch Rauch im Gefechtsfeld simulieren. Die Erzeugung von Nebel und die zugeordnete Simulation kann begleitend zur akustischen und optischen Simulation durch die Schallwiedergabeeinheit 2 bzw. die LED-Blitzlichteinheit erfolgen oder sie wird zur alleinigen Simulation unabhängig von einer Schusssimulation eingesetzt.

Gemäß einer Ausführungsform ist die Zerstäuberdüse 25 durch eine Heizung aufheizbar. Mittels der auf eine Temperatur in einem Temperaturbereich von z. B. 250°C bis 300°C und insbesondere auf eine Temperatur von etwa 275°C beheizten Zerstäuberdüse 25 ist ein simuliertes Schussereignis thermodynamisch darstellbar. Die beheizte Zerstäuberdüse 25 kann mittels eines Wärmebildgeräts oder dergleichen erfasst werden, z. B. von einem ein solches Wärmebildgerät gebrauchenden Scharfschützen.

Die Simulationsvorrichtung 1 kann als weiteres Modul einen Lasereffektor 26 aufweisen. Der Lasereffektor 26 ist vorzugsweise in der vorderen Abdeckkappe 16 angeordnet und zum Emittieren von breitflächig richtungsgerichteten und abstreuenden Laserstrahlen vorgesehen. Mittels dieser Laserstrahlen werden Beschuss- und Zielerfassungssensoren wie z. B. von Laserwarnern und/oder von aktiven und passiven Abwehrsystemen von gepanzerten Fahrzeugen und dergleichen ausgelöst, gestört und/oder geblendet. Bei Verwendung der Simulationsvorrichtung 1 zu Ausbildungszwecken können durch den Einsatz des Lasereffektors 26 Zielauffassungen von feindlichen Panzern oder Panzerabwehrwaffen abgebildet und simuliert werden. Gefechtsfahrzeuge können verbaute und Infanteristen können handgehaltene oder in den Panzerabwehrwaffen verbaute Laserlichtmodule und Zielentfernungsmesser aufweisen oder tragen. Hierbei wird das Ziel "angelasert" und somit der Abstand gemessen. Bei modernen Systemen wird die Entfernungsmessung an den Feuerleitrechner der Waffeneinheit des Systems weitergegeben, um somit die Waffe automatisch auf die Entfernung auszurichten. Bei älteren Systemen und bei handgehaltenen Systemen, welche oft durch Infanteristen verwendet werden, erfolgt die Zielentfernungsmessung ("Anlasern") durch einzelne von der Waffe getrennte Lasermodule und das Ausrichten der (Panzerabwehr-)Waffe anschließend händisch. Um solche Lasermessungen, die direkte oder indirekte Zielauffassungen durch Panzerabwehrwaffen oder feindliche Panzer darstellen, zu detektieren, haben gepanzerte Gefechtsfahrzeuge Sensoren, die ein solches "An- bzw. Ableuchten" durch Laserstrahlen wahrnehmen und davor warnen, teils den Ursprung (Richtung oder Richtung und Entfernung) angeben oder aktive oder passive Abwehrsysteme an den Fahrzeugen auslösen. Der Zweck des Lasereffektors der vorliegenden Simulationsvorrichtung liegt in der Ausbildung in einer Darstellung solcher Ereignisse der Zielauffassung und im Gefecht/Einsatz das Blenden und "Übersättigen/Überfluten" der Warnsysteme feindlicher Gefechtsfahrzeuge.

Weiterhin kann die Simulationsvorrichtung 1 oder die Steuereinheit eine Umfelderkennungseinrichtung aufweisen, die Umfeldsignale z. B. mittels Sensoren detektiert und unterschiedlichen Auslösesteuerungssignalen zuordnet. Die Umfelderkennungseinrichtung weist z. B. eine Kamera 27 auf, die an der Frontseite der Roboterplattform 10 angeordnet ist und einen nach vorne gerichteten Erfassungsbereich aufweist. Die Kamera 27 erfasst Bewegungen, Beschuss und/oder Geräusche und kann insbesondere auch Personen und Gegenstände detektieren, so dass die Steuereinheit aufgrund dieser Erfassung und Detektion jeweilige Auslösesteuerungssignale erzeugen kann, mit denen die gewünschten Simulationsvorgänge ausgewählt werden können.

Die Umfelderkennungseinrichtung kann eine weitere Kamera 28 aufweisen, die z. B. an dem Gehäuse 3 angeordnet ist und die mittels des Einsatzes einer KI-Software Personen und Fahrzeuge und deren Bewegungen detektieren und klassifizieren kann. Je nach Einstellung kann mit der künstlichen Intelligenz nur eine Bewegung der Roboterplattform 10 vorgenommen werden oder eine Schusssimulation ausgelöst werden, z. B. wenn taktisch ungünstige Bewegungen der übenden Truppe festgestellt werden. Jede Kamera 27, 28 und die darin angewandte Softwareanwendung kann die Art und Weise der Bewegung von Soldatinnen und Soldaten erfassen und als im Ausbildungskontext "richtig" oder "falsch" klassifizieren und dementsprechend handeln. Wenn sich beispielsweise eine Person nicht der Lage angepasst taktisch richtig bewegt, wird eine Aufklärung durch den Feind und eine Beschusssimulation durch die Simulationsvorrichtung ausgelöst.

Die beiden Kameras 27, 28 können in ihrer Funktionalität gegenseitig ausgetauscht werden. Primär ist die Kamera 27 an der Roboterplattform 10 jedoch für die Koordinierung der Bewegung der Roboterplattform 10 und die Kamera 28 am Gehäuse 3 für die Auslösung durch Personendetektionen oder durch Algorithmen der künstlichen Intelligenz vorgesehen.

Grundsätzlich kann die modular aufgebaute Simulationsvorrichtung 1 auch stationär und ohne Mobilroboter 9 bzw. Roboterplattform 10 betrieben werden. In diesem Fall entfällt die Kamera 27 der Roboterplattform 10. Dennoch kann die andere am Gehäuse 3 angeordnete und weiterhin nutzbare Kamera 28 neben den Auslösefunktionen auch zur visuellen Erfassung des Umfelds durch die Ausbildungsleitung verwendet werden und die Vorgänge im Umfeld können für die Ausbildung aus vielen Blickwinkeln, die auch eine Feindsicht umfassen können, für spätere Auswertungen aufgezeichnet werden.

Jedes Rad 29 des Fahrwerks 11 des Mobilroboters 9 bzw. seiner Roboterplattform 10 weist einen Nabenmotor als Antrieb auf. Die Roboterplattform 10 weist zur Stromversorgung des Antriebs insbesondere Batterien oder Akkus auf. Diese Batterien oder Akkus können auch die Stromversorgung der gesamten Simulationsvorrichtung 1 mit den jeweiligen Modulen übernehmen.

Der Mobilroboter 9 kann in teilautonomem Betrieb in der Steuerung vorprogrammierte GPS-Wegpunkte abfahren und die Simulationsvorrichtung 1 an seine unterschiedlichen Simulations- und Wirkungsorte bringen. Die jeweiligen Simulationsereignisse können auch programmgesteuert ablaufen oder sie werden durch wahlweisen Steuereingriff von einer Steuerzentrale oder einer Bedienperson der Simulationsvorrichtung über Fernsteuerung ausgewählt und ausgelöst. Die jeweiligen Simulationsereignisse können auch durch die Steuereinheit aufgrund von Informationen, die von Sensoren der Umfelderkennungseinrichtung bereitgestellt werden, selbständig ausgewählt und ausgelöst werden.

Weiterhin kann vorgesehen sein, dass der Mobilroboter 9 über einen Steuerungseingriff seitens einer Steuerzentrale individuell zum Anfahren von Simulations- und Wirkungsorten gesteuert wird. Die jeweiligen Simulationsereignisse können auch durch wahlweisen Steuereingriff von der Steuerzentrale ausgewählt und ausgelöst werden.

Der Mobilroboter 9 kann statt eines Fahrwerks mit Rädern auch ein Kettenfahrwerk aufweisen. Weiterhin kann der Mobilroboter 9 als schwimmfähige Einheit gebildet sein, so dass die Simulationsvorrichtung 1 auch auf Wasser eingesetzt werden kann.

**Bezugszeichenliste**

| | | | |
|---|---|---|---|
| 1 | Simulationsvorrichtung | 19 | hintere Abdeckkappe |
| 2 | Schallwiedergabeeinheit | 20 | Rohr |
| 3 | Gehäuse | 21 | vordere Rohröffnung |
| 4 | Gehäusewandung | 22 | hintere Rohröffnung |
| 5 | Längsachse | 23 | Hinterabschnitt |
| 6 | Gehäuseinnenraum | 24 | Nebelerzeugungseinheit |
| 7 | vordere Gehäuseöffnung | 25 | Zerstäuberdüse |
| 8 | hintere Gehäuseöffnung | 26 | Lasereffektor |
| 9 | Mobilroboter | 27 | Kamera |
| 10 | Roboterplattform | 28 | Kamera |
| 11 | Fahrwerk | 29 | Rad |
| 12 | Lautsprecheranordnung | 30 | Signalzeitbereich |
| 13 | Basslautsprecher | 31 | Signalzeitbereich |
| 14 | Bassmembran | 32 | Signalzeitbereich |
| 15 | Kolben | 33 | Basisschwelle |
| 16 | vordere Abdeckkappe | 34 | Auslöseschwelle |
| 17 | Öffnung | | |
| 18 | Öffnung | | |

## Patentansprüche

1. Simulationsvorrichtung (1) zur Simulation von Gefechtsfeldereignissen mit einer Schallwiedergabeeinheit (2), die dafür eingerichtet ist,
- eine Audiodatei wiederzugeben, die Steuersignale mit Signalspitzen aufweist, die ein Simulationsereignis auslöst, das für ein akustisch wirkendes Gefechtsfeldereignis repräsentativ ist, und/oder
- unterschiedliche Audiodateien wiederzugeben, die für unterschiedliche akustisch wirkende Gefechtsfeldereignisse repräsentativ sind,
und mit einer Steuereinheit zum Steuern und/oder Auswählen der jeweils wiederzugebenden Audiodatei.

2. Simulationsvorrichtung (1) nach Anspruch 1,
**dadurch gekennzeichnet, dass** die Simulationsvorrichtung (1) eine LED-Blitzlichteinheit aufweist und dass die Signalspitzen der in der Audiodatei enthaltenen Steuersignale als Simulationsereignis eine Blitzerzeugung mittels der LED-Blitzlichteinheit auslösen.

3. Simulationsvorrichtung (1) nach Anspruch 2,
**dadurch gekennzeichnet, dass** ein Lautsprecher der Schallwiedergabeeinheit (2) eine Bassmembran (14) aufweist und
dass die Steuersignale der Audiodatei die Bassmembran (14) mit solchen Membranauslenkungen schwingen lässt, die eine Blitzerzeugung der LED-Blitzlichteinheit auslösen.

4. Simulationsvorrichtung (1) nach Anspruch 3,
**dadurch gekennzeichnet, dass** ein Übertragungsmittel die Membranauslenkung der Bassmembran (14) auf eine Auslöseeinheit der LED-Blitzlichteinheit überträgt.

5. Simulationsvorrichtung (1) nach Anspruch 4,
**dadurch gekennzeichnet, dass** das mechanisch wirkende Übertragungsmittel, insbesondere ein Kolben (15) oder ein Stift, mit der Bassmembran (14) verbunden und von der Membranauslenkung bewegt wird, und dass die Auslöseeinheit eine mit der LED-Blitzlichteinheit gekoppelte Lichtschranke aufweist, die von dem Übertragungsmittel aufgrund seiner Steuerauslenkung zum Auslösen der Blitzerzeugung der LED-Blitzlichteinheit betätigt wird.

6. Simulationsvorrichtung (1) nach einem der Ansprüche 1 bis 5,
**dadurch gekennzeichnet, dass** sie zumindest eine Nebelerzeugungseinheit (24) aufweist.

7. Simulationsvorrichtung (1) nach Anspruch 6,
**dadurch gekennzeichnet, dass** die Nebelerzeugungseinheit (24) zumindest eine Zerstäuberdüse (25) aufweist, die zur thermodynamischen Simulation eines Schussereignisses temperierbar ist, insbesondere auf eine Temperatur im Bereich von 250°C bis 300°C.

8. Simulationsvorrichtung (1) nach einem der Ansprüche 1 bis 7,
**dadurch gekennzeichnet, dass** sie eine Umfelderkennungseinrichtung aufweist, die Umfeldsignale detektiert und unterschiedlichen Auslösesteuerungssignalen zuordnet.

9. Simulationsvorrichtung (1) nach Anspruch 8,
**dadurch gekennzeichnet, dass** die Umfelderkennungseinrichtung zumindest eine Kamera und/oder einen Lasereffektor (26) zum Detektieren und Klassifizieren von Gegenständen oder Personen aufweist.

10. Simulationsvorrichtung (1) nach einem der Ansprüche 1 bis 9,
**dadurch gekennzeichnet, dass** sie als mobile bewegbare Einheit oder als Mobilroboter (9) gebildet ist und insbesondere ein Fahrwerk zur Bewegung an unterschiedliche Einsatzorte aufweist.

11. Simulationsvorrichtung (1) nach Anspruch 10,
**dadurch gekennzeichnet, dass** die Steuereinheit ein Programm aufweist, das vorprogrammierte GPS-Wegpunkte eines Bewegungsweges zu unterschiedlichen Einsatzorten aufweist und die mobile Einheit bzw. der Mobilroboter (9) auf diesem Bewegungsweg steuert, oder
dass die Steuereinheit zum Ausführen frei wählbarer Simulationsereignisse und/oder Bewegungen der mobilen Einheit fernsteuerbar ist.

12. Simulationsvorrichtung (1) nach einem der Ansprüche 1 bis 11,
**dadurch gekennzeichnet, dass** eine Kommunikation zwischen einer Steuerzentrale und der Simulationsvorrichtung (1) mittels Kabel-, Funk-, Bluetooth-, Wifi- oder 4G/5G-Verbindung erfolgt.

13. Audiodatei zur Schallwiedergabe von simulierten Gefechtsfeldereignissen mittels einer Schallwiedergabeeinheit (2), insbesondere zur Schallwiedergabe mittels einer Schallwiedergabeeinheit (2) einer Simulationsvorrichtung (1) nach einem der Ansprüche 1 bis 12,
wobei die Audiodatei eingearbeitete Steuersignale enthält, die über eine Auslöseschwelle (34) reichende Signalspitzen enthalten und die zumindest ein ein Gefechtsfeldereignis simulierendes Simulationsereignis auslösen.

14. Audiodatei nach Anspruch 13,
**dadurch gekennzeichnet, dass** die Steuersignale zur definierten Auslösung einer Bassmembran (14) eines Lautsprechers der Schallwiedergabeeinheit (2) eingearbeitet werden.

15. Audiodatei nach Anspruch 13 oder 14,
**dadurch gekennzeichnet, dass** die Steuersignale als Simulationsereignis eine Schusskadenz einer Schusswaffe, insbesondere eines Maschinengewehrs, auslösen.
